# EUROPÄISCHE PATENTANMELDUNG

(11) **EP 0 601 379 A2**
(43) Veröffentlichungstag der Anmeldung: **15.06.1994**
(21) Anmeldenummer: 93118800.7
(22) Anmeldetag: 23.11.1993
(51) Int. Cl.: F28D 20/00, F28D 20/02, B23K 13/01

(54) **Verfahren zur Montage eines Kraftfahrzeug-Wärmespeichers**

(30) Priorität: 08.12.1992 DE 4241317; 08.07.1993 DE 4322813
(71) Anmelder: FRITZ WERNER, PRÄZISIONSMASCHINENBAU GmbH, D-65366 Geisenheim (DE)
(72) Erfinder: Boltz, Hartmut, Dipl.-Ing., D-56321 Brey (DE); Christ, Richard, Dr.-Ing., D-65281 Emmelshausen (DE); Jakobi, Karl-Josef, Dr.-Ing., D-65366 Geisenheim (DE)
(74) Vertreter: Andrejewski, Walter, Dr.

(57) **Zusammenfassung**

Verfahren zur Montage eines Kraftfahrzeug-Wärmespeichers mit einem Latentwärmespeicherwerk (2), welches einen Latentwärmespeicherbehälter (6) sowie darin ein Paket von Latentwärmespeicherzellen (4) aufweist, und mit einem Wärmespeichergehäuse (3), welches das Latentwärmespeicherwerk (2) mit einem Unterdruck-Isolationszwischenraum umgibt. Das Latentwärmespeicherwerk (2) wird mit dem Paket von Latentwärmespeicherzellen (4) vorgefertigt. Das vorgefertigte Latentwärmespeicherwerk (2) wird in das mit einem Gehäuseboden versehene Wärmespeichergehäuse (3) eingesetzt. Das Aggregat aus Wärmespeichergehäuse (3) und Latentwärmespeicherwerk (2) wird in eine Unterdruckkammer eingebracht, die eine Einrichtung zum Aufsetzen des Gehäusedeckels (8) aufweist. In der evakuierten Unterdruckkammer wird der Gehäusedeckel (8) auf das Wärmespeichergehäuse (3) aufgesetzt. Das Wärmespeichergehäuse (3) wird mit dem aufgesetzten Gehäusedeckel (8) durch einen Lötvorgang abdichtend verbunden. In das Wärmespeichergehäuse (3) wird gehäusedeckelseitig zumindest ein aktivierungsbedürftiges Hochvakuum-Getterelement eingesetzt Das Hochvakuum-Getterelement wird bei dem Lötvorgang für das Verbinden des Gehäusedeckels (8) mit dem Wärmespeichergehäuse (3) bei Erreichen der Löttemperatur aktiviert. Die Aktivierung wird erst durchgeführt, wenn der Isolations-Unterdruck einen vorgegebenen Sollwert erreicht hat.

## Beschreibung

Die Erfindung betrifft ein Verfahren zur Montage eines Kraftfahrzeug-Wärmespeichers, - mit einem Latentwärmespeicherwerk, welches einen Latentwärmebehälter sowie darin ein Paket von Latentwärmespeicherzellen aufweist, und mit einem Wärmespeichergehäuse, welches das Latentwärmespeicherwerk mit einem Unterdruck-Isolationszwischenraum umgibt, wobei das Latentwärmespeicherwerk mit seinem Latentwärmespeicherbehälter einerseits an einem Gehäuseboden des Wärmespeichergehäuses und andererseits an einem Gehäusedeckel des Wärmespeichergehäuses unmittelbar oder mittelbar abgestützt ist. - Ein solcher Kraftfahrzeug-Wärmespeicher wird zumeist im Kühlkreislauf des Kraftfahrzeuges angeordnet, z. B. zwischen Kraftfahrzeugmotor und Heizung. Es versteht sich, daß der Wärmeträger des Kühlkreislaufs über entsprechende Wärmeträgerleitungen, die den Unterdruck-Isolationszwischenraum durchdringen, in das Latentwärmespeicherwerk eingeführt und aus dem Latentwärmespeicherwerk wieder abgeführt werden muß. Kraftfahrzeug-Wärmespeicher des beschriebenen Aufbaues und der beschriebenen Zweckbestimmung sind in verschiedenen Ausführungsformen bekannt. Ihre Montage ist aufwendig.

Bei den bekannten Maßnahmen, von denen die Erfindung ausgeht (DE 41 08 227 A1), wird zum Zwecke der Montage offenbar das Latentwärmespeicherwerk mit dem Paket von Latentwärmespeicherzellen, die mit dem Latentwärmespeichermedium gefüllt sind, vorgefertigt. Offen bleibt, wie die weitere Montage bis zum fertigen Kraftfahrzeug-Wärmespeicher mit Unterdruck-Isolationszwischenraum und entsprechender Unterdruck-Isolierung erfolgt.

Der Erfindung liegt die Aufgabe zugrunde, ein einfaches Verfahren zur Montage eines Kraftfahrzeug-Wärmespeichers des beschriebenen Aufbaues anzugeben, welches es insbesondere erlaubt, auf einfache Weise die Unterdruck-Isolation zu verwirklichen, und welches in eine automatische Fertigungslinie des Kraftfahrzeug-Wärmespeichers insgesamt unschwer integriert werden kann und insoweit insbesondere für eine Massenfertigung geeignet ist.

Zur Lösung dieser Aufgabe lehrt die Erfindung, ausgehend von den eingangs beschriebenen Maßnahmen, die Kombination der folgenden Verfahrensschritte:
a) das Latentwärmespeicherwerk mit dem Paket von Latentwärmespeicherzellen, die mit dem Latentwärmespeichermedium gefüllt sind, wird vorgefertigt,
b) in das mit einem Gehäuseboden versehene Wärmespeichergehäuse wird das vorgefertigte Latentwärmespeicherwerk eingesetzt,
c) das Aggregat aus Wärmespeichergehäuse und Latentwärmespeicherwerk wird in eine Unterdruckkammer, die eine Einrichtung zum Aufsetzen des Gehäusedeckels aufweist, eingebracht,
d) die Unterdruckkammer wird geschlossen und bis auf den Isolationsunterdruck evakuiert,
e) in der evakuierten Unterdruckkammer wird der Gehäusedeckel auf das Wärmespeichergehäuse aufgesetzt und das Wärmespeichergehäuse wird mit dem aufgesetzten Gehäusedeckel abdichtend verbunden,
wobei danach der Isolationsunterdruck aufgehoben, die Unterdruckkammer geöffnet und der Kraftfahrzeug-Wärmespeicher herausgenommen werden. Es versteht sich, daß man im Rahmen des erfindungsgemäßen Verfahrens die Wärmeträgerleitungen, die den Kraftfahrzeug-Wärmespeicher mit dem Kühlkreislauf des Kraftfahrzeuges verbinden, oder andere Wärmeträgerleitungen, z.B. Abgasleitungen, die den Unterdruck-Isolationszwischenraum durchdringen, über den Gehäuseboden führen und an dieser Seite auch in das Latentwärmespeicherwerk einführen wird. Das bedeutet, daß der Gehäusedeckel, der erfindungsgemäß in der Unterdruckkammer aufgesetzt wird, keine Leitungsdurchdringungen aufweist und daher leicht montiert werden kann. Aber auch ein Gehäusedeckel, der entsprechende Leitungsdurchdringungen aufweist, kann erfindungsgemäß montiert werden. Es versteht sich, daß die Leitungsdurchdringungen durch den Gehäuseboden bzw. den Gehäusedeckel vakuumdicht ausgeführt sein müssen. Das gilt auch für die Einführung der Wärmeträgerleitungen in das Latentwärmespeicherwerk.

Nach bevorzugter Ausführungsform der Erfindung wird im Rahmen des erfindungsgemäßen Verfahrens die Unterdruckkammer bis auf einen Isolationsunterdruck von zumindest 10⁻⁶ Millibar evakuiert. Dadurch wird eine sehr wirksame Unterdruck-Isolierung erreicht. Sie kann durch eine Verspiegelung der äußeren Oberfläche des Latentwärmespeicherbehälters sowie der inneren Oberfläche des Wärmespeichergehäuses unterstützt werden. Wenn möglich, wird man mit einem Isolationsunterdruck von 10⁻⁷ bis 10⁻⁹ Millibar arbeiten.Im allgemeinen ist aus festigkeitstechnischen Gründen und aus fertigungstechnischen Gründen das Latentwärmespeicherwerk mit einem zylindrischen Querschnitt vorgefertigt. Dann wird man das Latentwärmespeicherwerk auch von einem zylindrischen Wärmespeichergehäuse umgeben.

Die abdichtende Verbindung zwischen Wärmespeichergehäuse und Gehäusedeckel kann auf verschiedene Weise durchgeführt werden. So kann zwischen dem Wärmespeichergehäuse und dem Gehäusedeckel ein Dichtungsring angeordnet und der Gehäusedeckel durch den Unterdruck im Wärmespeichergehäuse auf dem Wärmespeichergehäuse gehalten werden. Eine bevorzugte Ausführungsform der Erfindung arbeitet demgegenüber mit einer Unterdruckkammer, deren Einrichtung zum Aufsetzen des Gehäusedeckels eine Induktionslöteinrichtung aufweist, wobei zwischen Gehäusedeckel und Wärmespeichergehäuse ein Lötmittel, z.B. ein Lotring angeordnet wird.

Die Erfindung geht von der Erkenntnis aus, daß die im Rahmen der Montage eines Kraftfahrzeug-Wärmespeichers ohnehin erforderliche Einrichtung zur Erzeugung der Unterdruck-Isolierung zu einer Montageeinrichtung weitergebildet werden und entsprechend eingesetzt werden kann, wenn sie mit einer Einrichtung zum Aufsetzen des Gehäusedeckels ausgerüstet wird. Die Montage des Gehäusedeckels kann so einfach und sicher, bei kurzen Taktzeiten, erfolgen und ist folglich für eine Massenfertigung besonders geeignet. Im Rahmen der Erfindung liegt es, die in der Unterdruckkammer arbeitende Einrichtung, die den Deckel aufsetzt, auch so auszubilden, daß Sie einen vorher lose auf das Aggregat aufgesetzten Gehäusedeckel zunächst aufnehmen und nach Evakuieren der Unterdruckkammer wieder aufsetzen kann. Im Rahmen der Erfindung liegt es fernerhin, während des Evakuierungsvorganges eine induktive Erwärmung des Wärmespeichergehäuses auf etwa 400° C und des Latentwärmespeicherbehälters auf etwa 200° C durchzuführen. Durch dieses "Ausdampfen" können die Evakuierung beschleunigt und das Vakuum verbessert werden. Wird mit einem Lötring gearbeitet, so empfiehlt es sich, auch diesen "auszudampfen".

Das vorstehend beschriebene Verfahren hat sich bewährt. Allerdings muß durch Werkstoffauswahl oder Werkstoffvorbehandlung dafür gesorgt werden, daß ein für die Unterdruck-Isolierung eingerichteter Unterdruck nicht bereits bei der Montage des Kraftfahrzeug-Wärmespeichers oder danach durch Vakuumentgasung verlorengeht oder störend beeinflußt wird. - Vakuumentgasung bezeichnet das Phänomen, daß in einem Metall gelöste Gase unter dem Einfluß eines Unterdruckes freikommen. Metalle und insbesondere Stahl enthalten häufig atomaren Wasserstoff, der bei erhöhter Temperatur freikommt. Bei Temperaturen von etwa 1000° C und mehr kann die Entgasung in einer Umgebung mit ausreichend niedrigem Druck mit verhältnismäßig hoher Entgasungsgeschwindigkeit erfolgen.Um Spuren von schädlichen Gasen aus Räumen, die unter einem hohen Unterdruck stehen, zu entfernen, kennt man sogenannte Getter. Getter bezeichnet Fangstoffe, die in der Lage sind, die schädlichen Gase auf dem Wege der festen Sorption oder chemische Bindung zu entfernen. Als Getter dienen hauptsächlich die Metalle der ersten, zweiten und dritten Hauptgruppe des Periodensystems oder Verbindungen bzw. Legierungen davon. Bei Wasserstoff als schädlichem Gas wird zum Beispiel häufig mit Titan als Getterwerkstoff gearbeitet. Es ist bekannt, die Getter als sogenannte Hochvakuum-Getterelemente auszubilden, die mit besonderen Haltern in einem evakuierten Raum leicht untergebracht werden können. Solche Hochvakuum-Getterelemente sind durch geeignete Behandlung so eingerichtet, daß sie bei Umgebungstemperatur lagerfähig und/oder montierbar sind. Sie werden durch eine Wärmebehandlung oder einen Temperaturstoß nach der Montage in dem evakuierten Raum aktiviert. - Nicht zum Stand der Technik gehören Versuche, im Rahmen der vorstehend beschriebenen Maßnahmen ein oder mehrere Hochvakuum-Getterelemente in dem Wärmespeichergehäuse anzuordnen. Auf diese Weise sollen durch Vakuumentgasung freikommende schädliche Gase, insbesondere Wasserstoff, eingefangen werden. Die Hochvakuum-Getterelemente sollen gleichsam als atomare oder molekulare Pumpe wirken. Sie werden aktiviert, wenn der fertige, mit dem Gehäusedeckel versehene Kraftfahrzeug-Wärmespeicher sich nicht mehr in der Vakuumkammer befindet. Versuche haben gezeigt, daß diese Maßnahmen ohne weiteres nicht zum Erfolg führen, es sei denn, es werden eine verhältnismäßig große Vielzahl von einzelnen Hochvakuum-Getterelementen angeordnet, was kostenaufwendig ist.

In weiterer Ausbildung und Verbesserung des vorstehend beschriebenen Verfahrens liegt der Erfindung das weitere technische Problem zugrunde, ein den Isolations-Unterdruck beeinträchtigendes Freikommen von schädlichen Gasen im Zuge der Montage des Kraftfahrzeug-Wärmespeichers zu unterdrücken, und zwar ohne Beeinträchtigung der Taktzeit der automatischen Fertigung.

Zur Lösung dieser weiteren Aufgabe sind bei dem Verfahren nach Patentanspruch 1, bei dem in der evakuierten Unterdruckkammer der Gehäusedeckel auf das Wärmespeichergehäuse aufgesetzt sowie das Wärmespeichergehäuse mit dem aufgesetzten Gehäusedeckel durch einen Lötvorgang abdichtend verbunden wird, und zwar mit Hilfe einer Induktionslöteinrichtung mit Induktionsspule in der Unterdruckkammer, Gegenstand der Erfindung die weiteren Verfahrensschritte:
f) in das Wärmespeichergehäuse wird gehäusedeckelseitig zumindest ein aktivierungsbedürftiges Hochvakuum-Getterelement eingesetzt,
g) das Hochvakuum-Getterelement wird bei dem Lötvorgang für das Verbinden des Gehäusedeckels mit dem Wärmespeichergehäuse bei Erreichen der Löttemperatur aktiviert,
wobei die Aktivierung erst durchgeführt wird, wenn der Isolations-Unterdruck einen vorgegebenen Sollwert erreicht hat. Nach bevorzugter Ausführungsform der Erfindung wird das Hochvakuum-Getterelement unter dem Gehäusedeckel angeordnet.

Die Erfindung geht in bezug auf die vorstehend beschriebenen Maßnahmen von der Erkenntnis aus, daß die schädlichen Gase, die den Isolations-Unterdruck beeinträchtigen, wenn mit metallischen Werkstoffen gearbeitet wird, die das Phänomen einer Vakuumentgasung zeigen, bei der Erwärmung zur Durchführung des Lötvorganges und beim Auflöten des Gehäusedeckels freikommen. Arbeitet man im Rahmen der Merkmale f) und g) nach der weiteren Lehre der Erfindung, wonach die Aktivierung erst durchführt wird, wenn der Isolations-Unterdruck einen vorgegebenen Sollwert erreicht hat, den die Vakuumpumpe halten kann, so werden die freikommenden, an sich störenden schädlichen Gase, mögen sie auch spontan freikommen, von der Vakuumpumpe abgesaugt, so daß sie das Hochvakuum-Getterelement nicht gleichsam verbrauchen, weil dieses erst mit dem Lötvorgang und damit nach dem Absaugen der schädlichen Gase aktiviert wird. Das kommt in der Tatsache zum Ausdruck, daß die Aktivierung erst durchgeführt wird, wenn der Isolations-Unterdruck einen vorgegebenen Sollwert erreicht hat und dieser gehalten werden kann. Das Hochvakuum-Getterelement bleibt langfristig funktionsfähig. Es funktioniert langfristig als Getterpumpe und damit bleibt auch die über das Hochvakuum eingerichtete Isolierung langfristig für eine lange Lebensdauer des Kraftfahrzeug-Latentwärmespeichers funktionsfähig. Es versteht sich, daß ein Hochvakuum-Getterelement oder deren mehrere angeordnet werden, jenachdem für welche "Aufnahmekapazität" die einzelnen Getterelemente eingerichtet sind.

Im einzelnen bestehen im Rahmen der Erfindung mehrere Möglichkeiten der weiteren Ausbildung und Gestaltung des Verfahrens. So wird nach bevorzugter Ausführungsform der Erfindung das Hochvakuum-Getterelement in einem zentralen Bereich unter dem Gehäusedeckel angeordnet und wird dieser Bereich auf eine Aktivierungstemperatur des Hochvakuum-Getterelementes erhitzt, die niedriger liegt, als die Temperatur des Lötbereichs. Das kann durch geeignete Ausbildung und Anordnung der Induktionsspule der Induktionslöteinrichtung sowie geeignete Steuerung der induktiven Erwärmung unschwer eingerichtet werden. Im Rahmen der Erfindung liegt es, der Aktivierung des Hochvakuum-Getterelementes mit Hilfe der Induktionslöteinrichtung eine Ausdampfstufe vorzuschalten, bei der der Latentwärmespeicherbehälter zumindest gehäusedeckelseitig auf eine Temperatur von etwa 200° C sowie das Wärmespeichergehäuse gehäusedeckelseitig auf eine Temperatur von etwa 400° C erwärmt wird. Die Vakuumpumpe bleibt dabei eingeschaltet. Bei diesem Ausdampfvorgang freikommende schädliche Gase werden in dieser Ausdampfstufe abgesaugt, was eine störenden Beeinflussung der Taktzeiten bei der automatischen Fertigung nicht zur Folge hat. Eine solche Störung tritt deshalb nicht ein, weil die beschriebenen Temperaturen im Rahmen des Verfahrens nach dem Hauptpatent bzw. im Rahmen des erfindungsgemäßen Verfahren ohnehin durchlaufen werden müssen und der Temperaturgradient zur Einrichtung der Ausdampfstufe nur wenig verändert werden muß. Bei Erreichen eines vorgegebenen Sollwertes für den Isolations-Unterdruck bei weiterarbeitender Vakuumpumpe können die angegebenen Bauteile und/oder Bauteilbereiche für einige Sekunden im Lötbereich auf über 1000° C erwärmt werden. Es empfiehlt sich, nach Beendigung des Lötvorganges für den Gehäusedeckel die Temperatur noch für eine Minute bis zu einigen Minuten auf einer Temperatur von etwa 700° bis 800° C zu halten, wobei die Vakuumpumpe weiterarbeitet. Es empfiehlt sich, nach Beendigung des Lötvorganges für den Gehäusedeckel die Temperatur noch für eine Minute bis zu einigen Minuten auf einer Temperatur von etwa 400° C zu halten.

Im folgenden werden die Erfindung und ein Vorrichtung für die Durchführung des erfindungsgemäßen Verfahrens anhand einer lediglich ein Ausführungsbeispiel darstellenden Zeichnung ausführlicher erläutert.

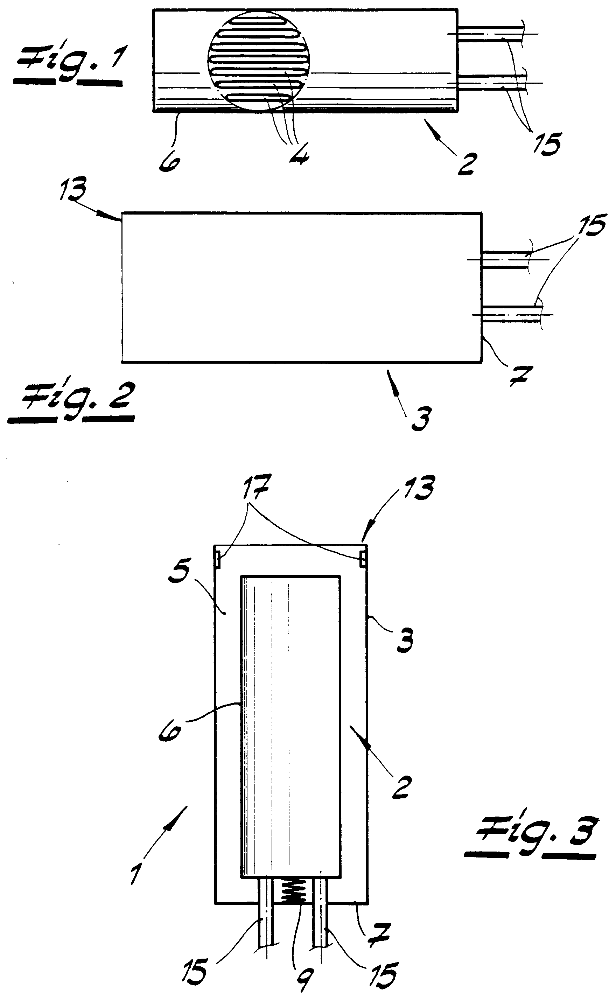

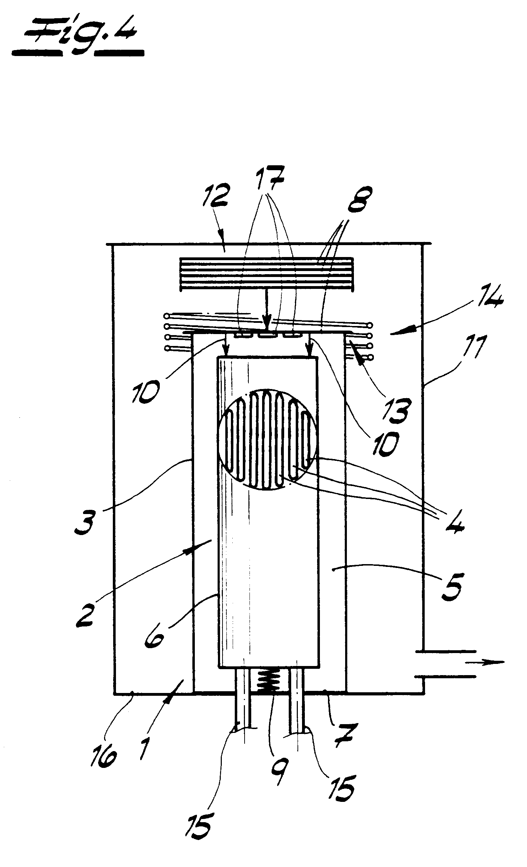

Die schematischen Figuren 1 bis 4 zeigen die verschiedenen Verfahrenschritte des erfindungsgemäßen Verfahrens.

In der Fig. 4 erkennt man den Kraftfahrzeug-Wärmespeicher 1, der nach dem erfindungsgemäßen Verfahren montiert wird. Er besteht aus einem Latentwärmespeicherwerk 2 und einem Wärmespeichergehäuse 3. In den Fig. 1 und 4 erkennt man das Latentwärmespeicherwerk 2 und in einem eingezeichneten Querschnitt dieser Figuren erkennt man ein Paket von Latentwärmespeicherzellen 4. Indiesen befindet sich das Latentwärmespeichermedium. Man erkennt in der Fig. 4, daß das Wärmespeichergehäuse 3 das Latentwärmespeicherwerk 2 mit einem Unterdruck-Isolationszwischenraum 5 umgibt. Zum Aufbau der Latentwärmespeicherzellen wird, nur beispielsweise, auf DE 40 36 392 A1 verwiesen. Angedeutet wurde in der Fig. 4, daß das Latentwärmespeicherwerk 2 mit seinem Latentwärmespeicherbehälter 6 einerseits an einem Gehäuseboden 7 des Wärmespeichergehäuses 3 und andererseits an einem Gehäusedeckel 8 des Wärmespeichergehäuses 3 abgestützt ist. Man erkennt am Gehäuseboden 7 eine federnde Abstützung 9, während es sich bei der Abstützung gegen den Gehäusedeckel 8 um nicht oder wenig federnde und formschlüssige Abstützungen 10 handeln kann.

Die Fig. 1 verdeutlicht, daß das Latentwärmespeicherwerk 2 mit dem Paket von Latentwärmespeicherzellen 4, die mit dem Latentwärmespeichermedium gefüllt sind, vorgefertigt wird. In der Fig. 2 erkennt man das Wärmespeichergehäuse 3, welches einerseits offen, andererseits aber bereits mit einem Gehäuseboden 7 versehen ist. In der Fig. 3 erkennt man, daß in das mit dem Gehäuseboden 7 versehene Wärmespeichergehäuse 3 das vorgefertigte Latentwärmespeicherwerk 2 eingesetzt wurde.

In der Fig. 4 erkennt man, daß das Aggregat aus Wärmespeichergehäuse 3 und Latentwärmespeicherwerk 2 in eine Unterdruckkammer 11 eingebracht wurde, die eine Einrichtung 12 zum Aufsetzen des Gehäusedeckels 8 aufweist. Es mag sich um ein Magazin mit mehreren Gehäusedeckeln 8 handeln, wobei das Magazin die Gehäusedeckel 8 auf den offenen Rand 13 des Wärmespeichergehäuses 3 aufsetzen kann. Es besteht aber auch die Möglichkeit, die einzelnen Gehäusedeckel 8 lediglich fallen zu lassen. Fernerhin besteht die Möglichkeit, auf die entsprechende Öffnung des Wärmespeichergehäuses 3 eines Gehäusedeckels 8 lose aufzusetzen und die Gesamtheit in die Unterdruckkammer 11 einzubringen, wo der Gehäusedeckel 8 aufgenommen, die Evakuierung durchgeführt wird und die Lötung erfolgt. Ist das Aggregat aus Wärmespeichergehäuse 3 und Latentwärmespeicherwerk 2 in die Unterdruckkammer 11 eingebracht, so wird die Unterdruckkammer geschlossen und bis auf den Isolations-Unterdruck evakuiert. Dieser Zustand ist in Fig. 4 bereits eingetreten. Man erkennt, daß in der evakuierten Unterdruckkammer 11 der Gehäusedeckel 8 auf das Wärmespeichergehäuse 3 aufgesetzt wurde, und daß das Wärmespeichergehäuse 3 mit dem aufgesetzten Gehäusedeckel 8 abdichtend verbunden worden ist. Das Lot kann mit dem Gehäusedeckel 8 verbunden und "ausgedämpft" werden, ehe die Verlötung erfolgt. Im Anschluß daran kann nunmehr der Isolations-Unterdruck aufgehoben, die Unterdruckkammer 11 geöffnet und der Kraftfahrzeug-Wärmespeicher 1 herausgenommen werden. Die Unterdruckkammer 11 ist bis auf einen Isolations-Unterdruck evakuiert worden. Im Ausführungsbeispiel und nach bevorzugter Ausführungsform der Erfindung besitzt das Latentwärmespeicherwerk 2 einen zylindrischen Querschnitt und folglich wird es bei der Montage mit einem zylindrischen Wärmespeichergehäuse 3 umgeben. Nicht gezeichnet wurde, daß zwischen dem Wärmespeichergehäuse 3 und dem Gehäusedeckel 8 ein Dichtungsring angeordnet werden kann und daß der Gehäusedeckel 8 durch den Unterdruck im Wärmespeichergehäuse 3 auf dem Wärmespeichergehäuse 3 festgehalten werden kann. Dazu ist es erforderlich, den Gehäusedeckel 8 zumindest provisorisch zu fixieren, damit er nach Öffnen der Unterdruckkammer 11 über den Unterdruck im Wärmespeichergehäuse 3 festgehalten wird. Man erkennt in der Fig. 4, daß die Einrichtung 12 zum Aufsetzen des Gehäusedeckels 8 eine Induktionslöteinrichtung 14 aufweist. Zwischen Gehäusedeckel 8 und Wärmespeichergehäuse 3 wird in diesem Falle ein Lötmittel angeordnet, z. B. ein Lötring vorgesehen. Dieser kann separat eingelegt oder mit dem Gehäusedeckel 8 bereits verbunden und wie bereits beschrieben, ausgedampft sein.

Man erkennt, daß im Ausführungsbeispiel die Wärmeträgerleitungen 15 für die Zuführung und Abführung des Wärmeträgers des Kühlkreislaufes des Kraftfahrzeuges über den Gehäuseboden 7 eingeführt wird. Entsprechend über den Behälterboden 16 erfolgt auch die Einführung bzw. Abführung des Wärmeträgers zum Latentwärmespeicher 2.

Man erkennt in den Figuren 3 und 4, daß in das Wärmespeichergehäuse 3 gehäusedeckelseitig zumindest ein aktivierungsbedürftiges Hochvakuum-Getterelement 17 eingesetzt worden ist. Die Anordnung und die Steuerung sind so getroffen, daß das Hochvakuum-Getterelement 17 mit dem Lötvorgang für das Verbinden des Gehäusedeckels 8 mit dem Wärmespeichergehäuse 3 bei Erreichen der Löttemperatur aktiviert wird. Das hat zur Folge, daß die Aktivierung erst durchgeführt wird, wenn der Isolations-Unterdruck einen vorgegebenen Sollwert erreicht hat. Im Ausführungsbeispiel und nach bevorzugter Ausführungsform der Erfindung ist das Hochvakuum-Getterelement 17 unter dem Gehäusedeckel 8 angeordnet. Es befindet sich dort in einem zentralen Bereich. Das Verfahren wird so gesteuert, daß in diesem Bereich eine Aktivierungstemperatur des Hochvakuum-Getterelementes 17 erreicht wird, die niedriger liegt als die Temperatur im Lötbereich. Sie liegt beispielsweise im Bereich von 800° bis 900° C, während im Lötbereich eine Temperatur von über 1000° C vorherrscht. Im einzelnen lassen sich ohne weiteres die Verfahrensschritte der Ansprüche 4 und 5 verwirklichen.

Der Lötvorgang wird zweckmäßigerweise durchgeführt, wenn das Wärmespeichergehäuse mit dem eingesetzten Latentwärmespeicherwerk senkrecht steht.

Gegenstamd der Erfindung sind auch Latentwärmespeicher, die nach zumindest einem der Verfahrensansprüche 1 bis 10 hergestellt worden ist.

## Patentansprüche

1. Verfahren zur Montage eines Kraftfahrzeug-Wärmespeichers, - mit
einem Latentwärmespeicherwerk, welches einen Latentwärmespeicherbehälter sowie darin ein Paket von Latentwärmespeicherzellen aufweist, und mit einem Wärmespeichergehäuse, welches das Latentwärmespeicherwerk mit einem Unterdruck-Isolationszwischenraum umgibt,
wobei das Latentwärmespeicherwerk mit seinem Latentwärmespeicherbehälter einerseits an einem Gehäuseboden des Wärmespeichergehäuses und andererseits an einem Gehäusedeckel des Wärmespeichergehäuses unmittelbar oder mittelbar abgestützt ist, und wobei die folgenden Verfahrensschritte verwirklicht werden:
a) das Latentwärmespeicherwerk mit dem Paket von Latentwärmespeicherzellen, die mit dem Latentwärmespeichermedium gefüllt sind, wird vorgefertigt,
b) in das mit einem Gehäuseboden versehene Wärmespeichergehäuse wird das vorgefertigte Latentwärmespeicherwerk eingesetzt,
c) das Aggregat aus Wärmespeichergehäuse und Latentwärmespeicherwerk wird in eine Unterdruckkammer, die eine Einrichtung zum Aufsetzen des Gehäusedeckels aufweist, eingebracht,
d) die Unterdruckkammer wird geschlossen und bis auf den Isolationsunterdruck evakuiert,
e) in der evakuierten Unterdruckkammer wird der Gehäusedeckel auf das Wärmespeichergehäuse aufgesetzt und das Wärmespeichergehäuse wird mit dem aufgesetzten Gehäusedeckel abdichtend verbunden,
wobei danach der Isolationsunterdruck aufgehoben, die Unterdruckkammer geöffnet und der Kraftfahrzeug-Wärmespeicher herausgenommen werden.

2. Verfahren nach Anspruch 1, wobei die Unterdruckkammer bis auf einen Isolationsunterdruck von etwa 10⁻⁶ Millibar evakuiert wird.

3. Verfahren nach einem der Ansprüche 1 oder 2, wobei das Latentwärmespeicherwerk mit einem zylindrischen Querschnitt vorgefertigt und von einem zylindrischen Wärmespeichergehäuse umgeben wird.

4. Verfahren nach einem der Ansprüche 1 bis 3, wobei zwischen dem Wärmespeichergehäuse und dem Gehäusedeckel ein Dichtungsring angeordnet und der Gehäusedeckel durch den Unterdruck im Wärmespeichergehäuse auf dem Wärmespeichergehäuse gehalten wird.

5. Verfahren nach einem der Ansprüche 1 bis 3, wobei mit einer Unterdruckkammer gearbeitet wird, deren Einrichtung zum Aufsetzen des Gehäusedeckels eine Induktionslöteinrichtung aufweist, wobei zwischen Gehäusedeckel und Wärmespeichergehäuse ein Lötmittel, z.B. ein Lotring, angeordnet wird.

6. Verfahren nach Anspruch 1, wobei in der evakuierten Unterdruckkammer der Gehäusedeckel auf das Wärmespeichergehäuse aufgesetzt sowie das Wärmespeichergehäuse mit dem aufgesetzten Gehäusedeckel durch einen Lötvorgang abdichtend verbunden wird, und zwar mit Hilfe einer Induktionslöteinrichtung mit Induktionsspule in der Unterdruckkammer, wobei danach der Isolations-Unterdruck aufgehoben, die Unterdruckkammer geöffnet und der Kraftfahrzeug-Wärmespeicher herausgenommen werden, wobei zusätzlich die folgenden Verfahrensschritte verwirklicht werden:
f) in das Wärmespeichergehäuse wird gehäusedeckelseitig zumindest ein aktivierungsbedürftiges Hochvakuum-Getterelement eingesetzt
g) das Hochvakuum-Getterelement wird bei dem Lötvorgang für das Verbinden des Gehäusedeckels mit dem Wärmespeichergehäuse bei Erreichen der Löttemperatur aktiviert,
und wobei die Aktivierung erst durchgeführt wird, wenn der Isolations-Unterdruck einen vorgegebenen Sollwert erreicht hat.

7. Verfahren nach Anspruch 6, wobei das Hochvakuum-Getterelement unter dem Gehäusedeckel angeordnet wird.

8. Verfahren nach einem der Ansprüche 6 oder 7, wobei das Hochvakuum-Getterelement in einem zentralen Bereich unter dem Gehäusedeckel angeordnet und dieser Bereich auf eine Aktivierungstemperatur des Hochvakuum-Getterelementes erwärmt wird, die niedriger liegt als die Temperatur des Lötbereichs.

9. Verfahren nach einem der Ansprüche 6 bis 8, wobei der Aktivierung des Hochvakuum-Getterelementes mit Hilfe der Induktionslöteinrichtung eine Ausdampfstufe vorgeschaltet wird, bei der der Latentwärmespeicherbehälter zumindest gehäusedeckelseitig auf eine Temperatur von etwa 200° C sowie das Wärmespeichergehäuse deckelseitig auf eine Temperatur von etwa 400° C erwärmt werden.

10. Verfahren nach einem der Ansprüche 6 bis 9, wobei nach Erreichen eines vorgegebenen Sollwertes für den Isolations-Unterdruck bei weiterarbeitender Vakuumpumpe die angegebenen Bauteile und/oder Bauteilbereiche für einige Sekunden im Lötbereich auf über 1000° C erwärmt werden und nach Beendigung des Lötvorganges für den Gehäusedeckel die Temperatur noch für eine Minute bis zu einigen Minuten auf einer Temperatur von etwa 700° bis 800° C gehalten werden.

11. Latentwärmespeicher, die nach dem Verfahren von zumindest einem der Verfahrensansprüche 1 bis 10 hergestellt worden ist.
